# EUROPÄISCHE PATENTSCHRIFT

(11) **EP 0 618 777 B1**
(45) Veröffentlichungstag und Bekanntmachung des Hinweises auf die Patenterteilung: **30.08.1995**
(21) Anmeldenummer: 92924476.2
(22) Anmeldetag: 04.12.1992
(51) Int. Cl.: A47L 9/18, B01D 47/02

(54) **STAUBSAUGER**
VACUUM CLEANER
ASPIRATEUR

(30) Priorität: 23.12.1991 AT 2561/91
(43) Veröffentlichungstag der Anmeldung: 12.10.1994
(73) Patentinhaber: ZENGERER, Johannes, A-8410 Wildon (AT)
(72) Erfinder: ZENGERER, Johannes, A-8410 Wildon (AT)
(74) Vertreter: Brauneiss, Leo, Dipl.Ing.
(86) Internationale Anmeldenummer: AT9200159
(87) Internationale Veröffentlichungsnummer: WO9312705

(56) Entgegenhaltungen:
- WO-A-91/10392
- BE-A- 777 900
- FR-A- 2 593 081
- NL-C- 32 508
- PATENT ABSTRACTS OF JAPAN vol. 6, no. 232 (M-172)18. November 1982 & JP A 57 131 995 (NIPPON DENSHIN DENWA KOSHA) 16 August 1982
- PATENT ABSTRACTS OF JAPAN vol. 10, no. 044 (M-455)2. Oktober 1985 & JP A 60 194 290 (MATSUSHITA DENKI SANGYO KK) 2 October 1985
- PATENT ABSTRACTS OF JAPAN vol. 1, no. 115 (M-039)26. April 1977 & JP A 52 052 258 (HITACHI LTD) 26 April 1977

## Beschreibung

Die Erfindung betrifft einen Staubsauger mit einem mit einer Unterdruckkammer, in der über ein Gebläse ein Unterdruck erzeugt wird, in Verbindung stehenden Flüssigkeitsbehälter, von dessen Bodenbereich ausgehend eine Saugleitung aufwärts verläuft und in dem quer zur Richtung der Saugleitung angeordnete Lamellen vorgesehen sind, die sich lediglich über einen Teil des Querschnittes des Flüssigkeitsbehälters erstrecken, wobei ein Teil des Umfanges jeder Lamelle an der Behälterwand anliegt und der restliche, in Abstand von der Behälterwand angeordnete Teil des Umfanges jeder Lamelle mit einem nach unten ragenden, vorzugsweise zurückgebogenem Ansatz versehen ist, und wobei der an der Behälterwand anliegende Teil des Umfanges benachbarter Lamellen zueinander versetzt, vorzugsweise an etwa gegenüberliegenden Stellen der Behälterwand anliegend, angeordnet ist.

Derartige Staubsauger sind aus der WO-A1-91/10392 bekannt geworden.

Bei diesem bekannten Staubsauger bildet die in den Flüssigkeitsbehälter eingefüllte Flüssigkeit, insbesondere Wasser, einen Flüssigkeitsfilter, in dem der über die Saugleitung angesaugte Staub od.dgl. gebunden wird. Ein solcher Staubsauger weist somit den Vorteil auf, daß kein Festfilter erforderlich ist, der gereinigt bzw. gewechselt werden muß, es ist vielmehr lediglich notwendig, das mit dem Staub beladene Wasser bzw. den im Bodenbereich des Flüssigkeitsbehälters abgelagerten Schlamm zu entfernen und neues, sauberes Wasser in den Flüssigkeitsbehälter einzufüllen. Ein weiterer Vorteil eines solchen einen Flüssigkeitsfilter aufweisenden Staubsaugers besteht darin, daß in der Flüssigkeit auch feine Staubpartikel und vor allem auch Bakterien und Viren gebunden werden und nicht in den zu reinigenden Raum zurückgefördert werden, wie dies bei bekannten Staubsaugern mit Festfiltern der Fall ist, da ja die Festfilter einen gewissen Luftdurchsatz ermöglichen und daher aus einem luftdurchlässigen Material bestehen müssen.

Durch den in der Unterdruckkammer vorhandenen Unterdruck wird naturgemäß in der im Flüssigkeitsbehälter vorhandenen Flüssigkeit eine Luftströmung erzeugt, die diese Flüssigkeit in Turbulenzen versetzt. Die im Flüssigkeitsbehälter befindlichen, in der eingangs beschriebenen Art angeordneten Lamellen bilden nun eine Turbulenzbremse für die Flüssigkeit und verhindern, daß diese Flüssigkeit durch die Luftströmung mitgerissen wird und dadurch in die Unterdruckkammer und von dort über die Luftaustrittsöffnungen des Gebläses in den zu reinigenden Raum zurückgefördert wird. Durch die Anordnung der Lamellen wird nämlich einerseits eine etwa horizontale Luftströmung gewährleistet, wobei der Strömungsweg durch die Anordnung der Lamellen wesentlich verlängert wird und die in der Flüssigkeit vertikal hochsteigenden Luftblasen, welche die Turbulenzen in der Flüssigkeit bewirken, werden an den Lamellenwänden zertrümmert, so daß eine Beruhigung der Flüssigkeit eintritt. Um selbst das Austreten von kleinsten, mit Staub beladenen Flüssigkeitströpfchen aus dem Flüssigkeitsbehälter zu verhindern, schlägt die genannten WO-A1 vor, die Lamellen an ihrem nicht an der Wand des Flüssigkeitsbehälters anliegenden Teil des Umfanges mit einem nach unten ragenden Ansatz zu versehen. Die Flüssigkeit umströmt diesen Ansatz, in der Flüssigkeit befindliche Luftblasen, die ja die Tendenz haben, vertikal aufzusteigen, folgen diesem Strömungsweg der Flüssigkeit jedoch nicht, sondern schlagen vielmehr an den Lamellen bzw. am Ansatz an und werden dadurch zertrümmert.

Die Praxis hat gezeigt, daß die in der genannten WO-A1 beschriebene Ausbildung des Staubsaugers zwar hinsichtlich des unerwünschten Austretens kleinster Staubpartikel aus den Luftaustrittsöffnungen des Gebläses, welche somit in den zu reinigenden Raum zurückbefördert werden, wesentlich bessere Ergebnisse liefert als bekannte mit einem Festfilter versehene Staubsauger, jedoch ein unerwünschtes Austreten von mit Feuchtigkeit beladener kleinster Luftbläschen nicht vollständig unterbunden wird.

Die vorliegende Erfindung hat sich zur Aufgabe gestellt, den bekannten Staubsauger der eingangs erwähnten Art derart zu verbessern, daß ein solches Austreten von Luftbläschen praktisch vollständig unterbunden wird. Zur Lösung dieser Aufgabe schlägt die Erfindung vor, daß an der Unterseite der Lamellen wenigstens ein weiterer, nach unten ragender Ansatz vorgesehen ist, der vorzugsweise in Richtung zu dem an der Behälterwand anliegenden Teil des Lamellenumfanges zurückgebogen ist. Die Anordnung derartiger weiterer Ansätze an der Unterseite der Lamellen bewirkt eine zusätzliche Turbulenzbremse, wobei sämtliche Luftbläschen in der Flüssigkeit zertrümmert und ein Austreten feuchter Luftbläschen in den zu reinigenden Raum vollständig unterbunden wird. Dadurch wird auch vermieden, daß sich bei einer Betätigung des Staubsaugers im zu reinigenden Raum befindlichen Möbelstücke od.dgl. in unerwünschter Weise mit einem dünnen Flüssigkeitsfilm überziehen.

Um die gestellte Aufgabe zu lösen, ist es weiters erforderlich, sicherzustellen, daß der Strömungsweg im Flüssigkeitsbehälter eine entsprechende Länge aufweist und entlang der in wesentlichen horizontal angeordneten Lamellen mäanderförmig verläuft. Es muß somit ein Bypass vermieden werden, über den eine direkte vertikale Strömung nach oben verläuft. Erfindungsgemäß erfolgt dies dadurch, daß der an der Behälterwand anliegende Teil des Umfanges der Lamellen gegenüber dieser Behälterwand abgedichtet ist, vorzugsweise mit einer Dichtung, z.B. aus Gummi oder aus elastischem Kunststoff, versehen ist. Die Anordnung einer solchen Dichtung verhindert, daß über die aus Fertigungsgründen fallweise entstehenden, unvermeidlichen Spalte zwischen dem Lamellenumfang und der Behälterwand Luftblasen direkt vertikal nach oben aufsteigen und so in die Unterdruckkammer gelangen. Die Anordnung einer Dichtung an den Lamellen beispielsweise in Form einer Dichtungslippe ermöglicht hiebei ein Entfernen der Lamellen aus dem Gehäuse des Flüssigkeitsbehälters zwecks Reinigung desselben und der Lamellen, wobei nach dem Einsetzen der Lamellen in das Gehäuse wieder die erforderliche Dichtheit gegeben ist.

Ein solches Entfernen der Lamellen aus dem Gehäuse des Flüssigkeitsbehälters wird dadurch ermöglicht, daß diese Lamellen von etwa quer zur Lamellenebene verlaufenden stangen- oder rohrförmigen Trägern gehalten sind, wobei die Lage der Lamellen auf den Trägern vorzugsweise einstellbar ist. Diese Anordnung ermöglicht ein Herausheben des Lamellenpaketes aus dem Gehäuse des Flüssigkeitsbehälters, wobei bei einer Einstellbarkeit der Lage der Lamellen auf den Trägern der Abstand zwischen den Lamellen verändert und den jeweiligen Erfordernissen in optimaler Weise angepaßt werden kann.

Um eine solche Veränderung der Lage der Lamellen auf den Trägern auf einfache Weise vornehmen zu können, sind die Träger zweckmäßig von Gewindestangen gebildet, auf die Stützmuttern für die Lamellen aufgeschraubt sind.

Weiters ist es von Vorteil, wenn die Ebene der Lamellen gegen den in Abstand von der Behälterwand angeordneten Teil des Umfanges derselben nach unten geneigt verläuft. Die Neigung kann hiebei geringfügig sein und soll nur so groß sein, damit bei einem Entfernen der Lamellen aus dem Gehäuse des Flüssigkeitsbehälters bzw. bei entleertem Flüssigkeitsbehälter die auf der Oberfläche der Lamellen befindliche Flüssigkeit abläuft.

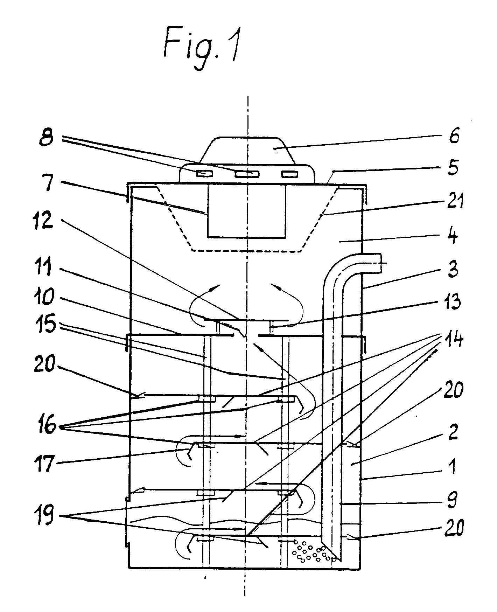

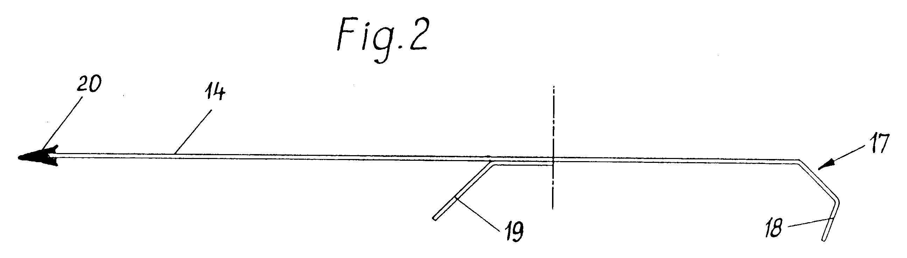

In der Zeichnung ist die Erfindung an Hand eines Ausführungsbeispieles schematisch veranschaulicht. Fig.1 zeigt einen Längsschnitt durch einen erfindungsgemäßen Staubsauger. Fig.2 stellt in größerem Maßstab einen Schnitt durch eine Lamelle dar.

Der erfindungsgemäße Staubsauger weist ein Gehäuse 1 auf, das einen Flüssigkeitsbehälter 2 bildet, sowie ein Gehäuse 3, das eine Unterdruckkammer 4 bildet. Beim dargestellten Ausführungsbeispiel sind die Gehäuse 1,3 übereinander angeordnet und miteinander, vorzugsweise lösbar, verbunden. Es können aber auch die Gehäuse 1,3 nebeneinander, vorzugsweise auf einem gemeinsamen Fahrgestell, angeordnet sein.

Das die Unterdruckkammer 4 bildende Gehäuse 3 ist durch einen Deckel 5 luftdicht verschlossen, in dem ein motorisch angetriebenes Gebläse 6 angeordnet ist, dessen in die Unterdruckkammer 4 mündende Saugöffnung von einem rohrförmigen Ansatzteil 7 umgeben ist und das an der Außenseite des Deckels 5 mit Luftaustrittsöffnungen 8 versehen ist.

Eine Saugleitung 9 durchsetzt den Boden 10 des Gehäuses 3, wobei die Mündung der Saugleitung 9 im Bodenbereich des Flüssigkeitsbehälters 4 angeordnet ist. Das aus dem Gehäuse 3 herausragende Ende dieser Saugleitung 9 ist in bekannter, nicht dargestellter Weise über einen Staubsaugerschlauch mit einer Saugdüse od.dgl. verbunden.

Im Boden 10 des Behälters 3 ist eine Öffnung 11 vorgesehen, über die der Flüssigkeitsbehälter 2 mit der Unterdruckkammer 4 in Verbindung steht. Oberhalb der Öffnung 11 ist eine Abdeckung 12 vorgesehen, die über Distanzstücke 13 am Boden 10 befestigt ist.

Im Flüssigkeitsbehälter 2 sind oberhalb der Mündung der Saugleitung 9 mehrere Lamellen 14 angeordnet, deren Ausbildung in Fig.2 in größerem Maßstab dargestellt ist. Die Lamellen 14 werden von Gewindestangen 15 getragen, die sich vom Boden 10 des Gehäuses 3 abwärts erstrecken, so daß bei einem Lösen der in an sich bekannter, nicht näher dargestellter Weise ausgebildeten Verbindung zwischen dem Gehäuse 1 und dem Gehäuse 3 die Lamellen 14 aus dem Flüssigkeitsbehälter 2 herausgehoben werden können. Auf die Gewindestangen 15 sind Gewindemuttern 16 aufgeschraubt, welche die Lamellen 14 abstützen. Durch Verdrehen der Gewindemuttern 16 kann die Lage der Lamellen 14 verändert und den jeweiligen Erfordernissen in optimaler Weise angepaßt werden.

Wie aus Fig.1 ersichtlich ist, sind die Lamellen 14 derart ausgebildet, daß lediglich ein Teil des Umfanges jeder Lamelle 14 an der Wand des Behälters 1 anliegt, wobei der übrige, nicht an der Wand des Behälters 1 anliegende Teil des Umfanges jeder Lamelle mit einem nach unten ragenden Ansatz 17 versehen ist, dessen unteres Ende bei 18 zurückgebogen ist. An der Unterseite jeder Lamelle 14 befindet sich ein weiterer Ansatz 19, der gleichfalls in Richtung zu dem an der Wand des Behälters 1 anliegenden Teil des Lamellenumfanges zurückgebogen ist. Obwohl in der Zeichnung lediglich ein solcher weiterer Ansatz 19 dargestellt ist, ist es klar, daß an der Unterseite der Lamellen auch mehrerer solcher weiteren Ansätze vorgesehen sein können.

Die Abdichtung des an der Wand des Behälters 1 anliegenden Teiles des Umfanges der Lamellen 14 erfolgt über Dichtungslippen 20 aus Gummi, so daß, wie erwähnt, das Lamellenpaket mittels der Gewindestangen 15 aus dem Flüssigkeitsbehälter 2 herausgehoben werden kann und trotzdem die Entstehung eines Bypasses durch Spalte zwischen der Wand des Behälters und dem Umfang der Lamellen dort, wo diese Lamellen an der Behälterwand anliegen sollen, vermieden wird.

Wie bereits erwähnt, ist auch eine Ausführungsform möglich, bei welcher das Gehäuse 3 neben dem Gehäuse 1 und nicht oberhalb desselben angeordnet ist. In diesem Fall ist das Gehäuse 1 durch einen gesonderten Deckel luftdicht verschlossen, von dem die Gewindestangen 15 nach unten abstehen, es mündet die Saugleitung 9 über diesen gesonderten Deckel in den Flüssigkeitsbehälter 2, und die Verbindung zwischen diesem Flüssigkeitsbehälter 2 und der Unterdruckkammer 4 erfolgt über eine externe Leitung, beispielsweise über einen Schlauch.

Der Ansatzteil 7 kann von einem Wasserabscheideschirm 21 umgeben sein, der mit dem Deckel 5 austauschbar verbunden ist und aus einem luftdurchlässigen Textil- oder Papiermaterial oder aus einem feinmaschigen Metallsieb bestehen kann.

Beim Betrieb des erfindungsgemäßen Staubsaugers wird in die Flüssigkeitskammer 2 Wasser eingefüllt und zwar in einer solchen Menge, daß alle Lamellen 14 sich unterhalb des Flüssigkeitsspiegels befinden. Wird bei einem Einschalten des das Gebläse 6 antreibenden Elektromotors in der Unterdruckkammer 4 ein Unterdruck erzeugt, so entsteht, da die Unterdruckkammer 4 über die Öffnung 11 mit dem Flüssigkeitsbehälter 2 verbunden ist, auch in diesem ein Unterdruck, durch welchen ein Ansaugen von Staub über die Saugleitung 9 erfolgt. Dieser Staub gelangt in das im Flüssigkeitsbehälter 2 befindliche Wasser, wird durch dieses gebunden und setzt sich in der Folge als Schlamm am Boden des Flüssigkeitsbehälters 2 ab. Dieser Schlamm muß, zweckmäßig zusammen mit dem Wasser, von Zeit zu Zeit entfernt werden. Hiefür wird die luftdichte Verbindung zwischen dem Gehäuse 1 und dem Gehäuse 3 gelöst, das Gehäuse 3 wird zusammen mit den Lamellen 14 abgehoben und der Flüssigkeitsbehälter 2 wird entleert und gespült.

Die erfindungsgemäße Ausbildung des Staubsaugers ermöglicht eine praktisch vollständige Absonderung selbst feinster Staubpartikel sowie vorhandener Bakterien, Viren od.dgl.

## Patentansprüche

1. Staubsauger mit einem mit einer Unterdruckkammer (4), in der über ein Gebläse (6) ein Unterdruck erzeugt wird, in Verbindung stehenden Flüssigkeitsbehälter (2), von dessen Bodenbereich ausgehend eine Saugleitung (9) aufwärts verläuft und in dem quer zur Richtung der Saugleitung angeordnete Lamellen (14) vorgesehen sind, die sich lediglich über einen Teil des Querschnittes des Flüsigkeitsbehälters (2) erstrecken, wobei ein Teil des Umfanges jeder Lamelle (14) an der Behälterwand anliegt und der restliche, in Abstand von der Behälterwand angeordnete Teil des Umfanges jeder Lamelle (14) mit einem nach unten ragenden, vorzugsweise zurückgebogenen, Ansatz (17) versehen ist, und wobei der an der Behälterwand anliegende Teil des Umfanges benachbarter Lamellen (14) zueinander versetzt, vorzugsweise an etwa gegenüberliegenden Stellen der Behälterwand anliegend, angeordnet ist, dadurch gekennzeichnet, daß an der Unterseite der Lamellen (14) wenigstens ein weiterer, nach unten ragender Ansatz (19) vorgesehen ist, der vorzugsweise in Richtung zu dem an der Behälterwand anliegenden Teil des Lamellenumfanges zurückgebogen ist.

2. Staubsauger nach Anspruch 1, dadurch gekennzeichnet, daß der an der Behälterwand anliegende Teil des Umfanges der Lamellen (14) gegenüber dieser Behälterwand abgedichtet ist, vorzugsweise mit einer Dichtung (20), z.B. aus Gummi oder aus elastischem Kunststoff, versehen ist.

3. Staubsauger nach Anspruch 1 oder 2, dadurch gekennzeichnet, daß die Lamellen (14) von etwa quer zur Lamellenebene verlaufenden stangen- oder rohrförmigen Trägern (15) gehalten sind, wobei die Lage der Lamellen (14) auf den Trägern (15) vorzugsweise einstellbar ist.

4. Staubsauger nach Anspruch 3, dadurch gekennzeichnet, daß die Träger (15) von Gewindestangen gebildet sind, auf die Stützmuttern (16) für die Lamellen (14) aufgeschraubt sind.

5. Staubsauger nach Anspruch 1, dadurch gekennzeichnet, daß die Ebene der Lamellen (14) gegen den im Abstand von der Behälterwand angeordneten Teil des Umfanges derselben nach unten geneigt verläuft.

## Claims

1. Vacuum cleaner having a liquid container (2) communicating with a vacuum chamber (4) in which a vacuum is generated via a blower (6), a suction line (9) starting from the base region of the liquid container (2) and running upwards, lamellae (14) extending in the liquid container (2) crosswise relative to said suction line (9) merely over a portion of the cross section of the liuqid container (2), a portion of the circumference of each lamella (14) abutting the container wall and the remaining portion of the circumference of each lamella (14) arranged at a distance from the container wall being provided with an extension (17) projecting downwards and preferably bent backwards, the portion of the circumference abutting the container wall of adjacent lamellae (14) being disposed staggered in relation to one another, preferably at approximately opposite points of the container wall, characterized in that at least one further extension (19) projecting downwards and preferably bent backwards in the direction of the portion of the circumference of the lamellae abutting the container wall is provided on the underside of the lamellae (14).

2. Vacuum cleaner according to claim 1, characterized in that the portion of the circumference of the lamellae (14) abutting the container wall is sealed in relation to said container wall, preferably by means of a seal (20), for instance of rubber or elastic plastics material.

3. Vacuum cleaner according to claim 1 or 2, characterized in that the lamellae (14) are held by rod-shaped or tubular supports (15) extending approximately crosswise to the lamella plane, the position of the lamellae (14) on the supports (15) preferably being ajustable.

4. Vacuum cleaner according to claim 3, characterized in that the supports (15) are formed of threaded rods screwed onto the supporting nuts (16) for the lamellae (14).

5. Vacuum cleaner according to claim 1, characterized in that the plane of the lamellae (14) is inclined downwards in relation to the portion of the circumference of the lamellae arranged at a distance from the container wall.

## Revendications

1. Aspirateur, avec un réservoir de liquide (2) communiquant avec une chambre à vide (4) dans laquelle une dépression est produite par une soufflante (6), une conduite d'aspiration (9) s'étendant de la région de fond du réservoir de liquide (2) vers le haut, des lamelles (14) étant pourvues dans le réservoir et s'étendant transversalement à la direction de la conduite d'aspiration seulement sur une partie de la section du réservoir de liquide (2), une partie de la circonférence de chaque lamelle (14) adjacent à la paroi du résevoir de liquide et la partie restante de la circonférence de chaque lamelle (14) disposée à distance de la paroi du réservoir de liquide étant pourvue d'un appendice (17) dépassent vers le bas et de préférence recourbé, la partie de la circonférence adjacent à la paroi du réservoir des lamelles voisines disposée décalée l'une par rapport à l'autre,de préférence en des points approximativement opposés de ladite paroi, caractérisé en ce qu'au moins un appendice (19) additionnel dépassent vers le bas et recourbé de préférence en direction de la partie de la circonférence des lamelles adjacent à le paroi du réservoir est pourvu à la face inférieure des lamelles (14).

2. Aspirateur selon la revendication 1, caractérisé en ce que la partie de la circonférence des lamelles (14) adjacent à la paroi du réservoir est étanchée par rapport à ladite paroi, de préférence par un étoupage (20), par exemple en caoutchouc ou en matière plastique souple.

3. Aspirateur selon la revendication 1 ou 2, caractérisé en ce que les lamelles (14) sont tenues par des supports (15) en barres ou tubulures s'étendent approximativement transversalement eu plan des lamelles, la position des lamelles (14) sur les supports (15) étant de préférence adjustable.

4. Aspirateur selon la revendication 3, caractérisé en ce que les supports (15) sont pourvus en forme de tiges filetées sur lequelles des écrous (16) de support pour les lamelles (14) sont vissés.

5. Aspirateur selon la revendication 1, caractérisé en ce que le plan des lamelles (14) dépasse vers le bas par rapport à le partie de la circonférence des lamelles disposée à distance de la paroi du réservoir.
